# EUROPEAN PATENT APPLICATION

(11) **EP 4 826 890 A1**
(43) Date of publication of application: **21.10.2026**
(21) Application number: 25804971.7
(22) Date of filing: 23.04.2025
(51) Int. Cl.: H01M 50/533

(54) **ANTI-TEARING METHOD FOR TAB, AND TAB, ELECTRODE ASSEMBLY AND BATTERY**

(30) Priority: 21.02.2025 CN 202510199722
(71) Applicant: Eve Power Co., Ltd., Jingmen, Hubei 448000 (CN)
(72) Inventor: YU, Chen, Jingmen, Hubei 448000 (CN); LIU, Hanxiang, Jingmen, Hubei 448000 (CN); TAN, Mingsheng, Jingmen, Hubei 448000 (CN)
(74) Representative: Nederlandsch Octrooibureau
(86) International application number: PCT/CN2025/090740
(87) International publication number: WO 2026/174656

(57) **Abstract**

Provided are a method for preventing tearing of a tab, a tab, an electrode assembly, and a battery. The method for preventing the tearing of the tab includes: providing an adhesive material at a welding portion of the tab to form a buffering member at least partially covering the tab. By providing the adhesive material at the welding portion of the tab where tearing is likely to occur, to form the buffering member at least partially covering the welding portion, the tab can be prevented from tearing at the welding portion, reducing a defect rate of tab tearing.

## Description

This application claims priority to Chinese Patent Application No. 202510199722.2, titled "METHOD FOR PREVENTING TAB TEARING, TAB, ELECTRODE ASSEMBLY, AND BATTERY" and filed with China National Intellectual Property Administration on February 21, 2025, the entire contents of which are incorporated herein by reference.

### FIELD

The present disclosure relates to the technical field of power batteries, and particularly, to a method for preventing tearing of a tab, a tab, an electrode assembly, and a battery.

### BACKGROUND

In the related art, tab tearing is a phenomenon that commonly occurs during battery production, and mainly manifests as tearing of one or more layers at a proximal end of a tab. Tab tearing may adversely affect the electrical performance and safety performance of a battery.

### SUMMARY

### Technical Problem

In the related art, there exists a technical problem that tabs are prone to tearing, which adversely affects the electrical performance and safety performance of a battery.

### Technical Solution

An embodiment of the present disclosure provides a method for preventing tearing of a tab, a tab, an electrode assembly, and a battery, which can improve the technical problem in the related art that tabs are prone to tearing and thereby adversely affects the electrical performance and safety performance of a battery

In a first aspect, an embodiment of the present disclosure provides a method for preventing tearing of a tab. The method includes:

providing an adhesive material at a welding portion of the tab to form a buffering member at least partially covering the welding portion.

In a second aspect, an embodiment of the present disclosure provides a tab, with a welding portion formed on the tab. The tab is provided with a buffering member at least partially covering the welding portion.

In a third aspect, an embodiment of the present disclosure provides an electrode assembly. The electrode assembly includes the tab according to any one of the above embodiments.

In a fourth aspect, an embodiment of the present disclosure provides a battery. The battery includes the tab according to any one of the above embodiments, or the electrode assembly according to the above embodiments.

### Beneficial effects of the embodiments of the present disclosure

In the embodiments of the present disclosure, the adhesive material is provided at the welding portion of the tab where tearing is likely to occur, to form a buffering member at least partially covering the welding portion, thereby preventing tearing of the tab at the welding portion and reducing a defect rate associated with tab tearing.

### BRIEF DESCRIPTION OF THE DRAWINGS

In order to more clearly illustrate the technical solutions of the embodiments of the present disclosure, the drawings used in description of the embodiments are briefly described below. Apparently, the drawings described below merely illustrate some embodiments of the present disclosure. Based on these drawings, other drawings can be obtained by those skilled in the art without creative effort.
FIG. 1 is a schematic structural diagram of an electrode plate before forming a welding portion according to an embodiment of the present disclosure.
FIG. 2 is a schematic structural diagram of an electrode plate after forming a welding portion according to an embodiment of the present disclosure.
FIG. 3 is a schematic structural diagram of an electrode plate according to an embodiment of the present disclosure.
FIG. 4 is a schematic structural diagram of a tab according to an embodiment of the present disclosure.

### DETAILED DESCRIPTION OF THE EMBODIMENTS

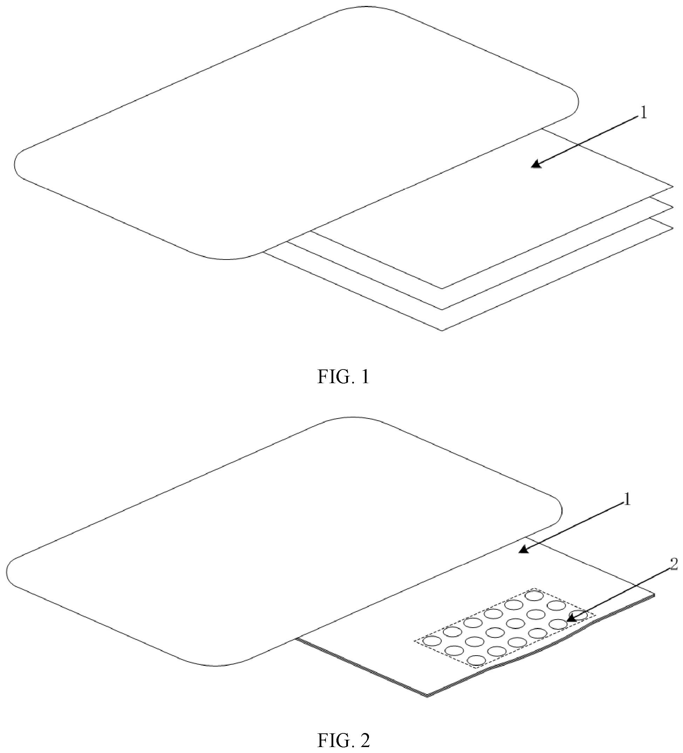

With reference to FIG. 1 to FIG. 4, a method for preventing tearing of a tab according to an embodiment of the present disclosure includes: providing an adhesive material at a welding portion 2 of a tab 1 to form a buffering member 3 at least partially covering the welding portion 2.

In this embodiment, the adhesive material is provided at the welding portion 2 of the tab 1 where tearing is likely to occur, to form the buffering member 3 for preventing tearing of the tab 1. The buffering member 3 at least partially covers the welding portion 2, thereby preventing tearing of the tab 1 at the welding portion 2, reducing a defect rate associated with tearing of the tab 1, and alleviating the technical problem in the related art that the tab 1 is prone to tearing, which adversely affects the electrical performance and safety performance of a battery.

The technical solutions of the present disclosure are described below in conjunction with specific embodiments.

It should be noted that a proximal end of the tab 1 refers to an end of the tab 1 close to an electrode plate 4 or a cell pack and is a portion that is in direct contact with an ultrasonic welding horn.

In one embodiment, with reference to FIG. 1 and FIG. 2, a welding portion 2 is formed on the tab 1. The welding portion 2 includes a plurality of weld marks. Through the welding portion 2, welding of a plurality of layers of the tab 1 is achieved, as well as welding between the plurality of layers of the tab 1 and a connecting sheet.

It can be understood that the tab 1 in FIG. 1 is not brought into contact with the ultrasonic welding horn for welding, whereas FIG. 2 is a schematic diagram illustrating welding of the tab 1 by contact with the ultrasonic welding horn. When the welding portion 2 is formed on the tab 1, the plurality of layers of tabs 1 are laminated and welded at the welding portion 2 to form a recessed structure.

The "recessed structure" refers to circular pits within the dashed box in FIG. 2. The pits are weld marks formed by pressing the ultrasonic welding horn downward. It can be understood that using different numbers and shapes of welding horns may result in pits having different numbers and shapes. The pits are used to achieve welding between the welding portion 2 of the tab 1 and the connection sheet.

The ultrasonic welding horn presses the tab downward to form the weld marks. At the weld indentation, and the tab 1 is welded to the connecting sheet on one side at the weld mark positions. After the welding is completed, the buffering member 3 at least partially covering the welding portion 2 is formed on the other side of the tab 1. As a result, during movement of the tab 1, tearing of the tab 1 caused by high stress at the weld mark positions is avoided.

The welding portion 2 corresponds to the region within the dashed box in FIG. 2. Compared to other portions of the tab 1, the welding portion 2 is further formed with the above-described recessed structures, that is, the welding portion 2 has an uneven surface.

It can be understood that due to the presence of a plurality of recessed structures, the welding portion 2 may exhibit an overall downward deformation while the ultrasonic welding horn presses downward to form the recessed structures.

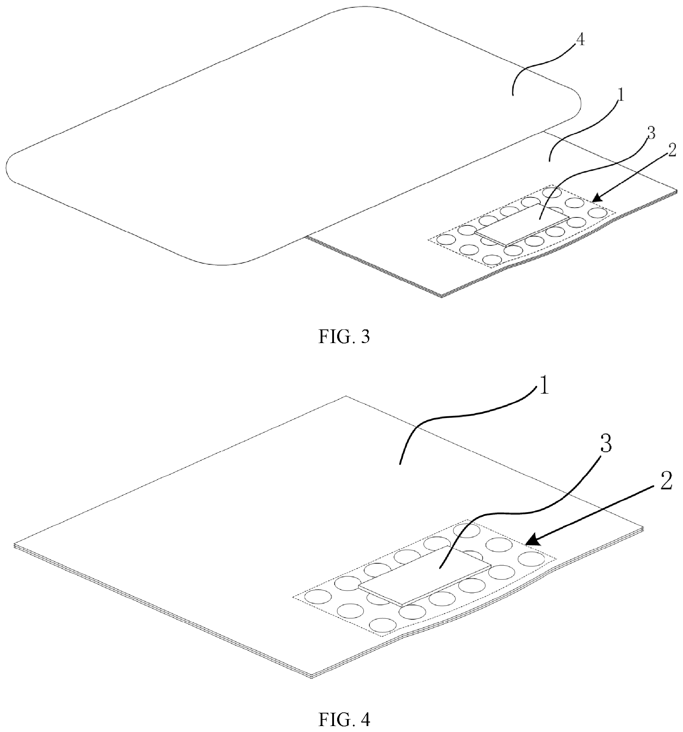

It should be noted that relatively large stress is likely to be generated at the recessed structures, which may lead to tearing of the welding portion 2 at the positions. Therefore, with reference to FIG. 3, by forming the buffering member 3 at a surface of the welding portion 2, the stress applied to the welding portion 2 at the recessed structures can be reduced by using the buffering member 3, thereby reducing the occurrence of tearing of the welding portion 2.

In one embodiment, the buffering member 3 is formed on the welding portion 2 by an adhesive material coating process. An adhesive liquid volume of the adhesive material is **a** in the unit of milliliter; a surface area of the welding portion (2) is **b** in the unit of square millimeter; a surface tension of the adhesive material is **c** in the unit of millinewton per meter; an adhesive liquid viscosity of the adhesive material is **d** in the unit of millipascal-second; and **k** is a correlation coefficient ranging from 15 to 20, and **a**=(**b**×**k**)/(**c**×**d**).

The adhesive material has an adhesive liquid volume of a in unit of milliliter; the welding portion 2 has a surface area of b in unit of square millimeter, the adhesive material has a surface tension of c in unit of millinewtons per meter; the adhesive material has an adhesive liquid viscosity of d in unit of millipascal-second; and k is a correlation coefficient ranging from 15 to 20, where a=(b×k)/(c×d).

k may be, but is not limited to, 15, 17, 19, or 20.

It can be understood that k serves to balance the units on both sides of the equation to cause the numerical values and the units on both sides of the equation to be consistent.

It can be understood that with the adhesive material satisfying a=(b×k)/(c×d), a defect rate associated with tearing of the tab 1 can be further reduced.

In some embodiments, the buffering member 3 may alternatively be formed on the welding portion 2 through adhesive bonding.

In one embodiment, the adhesive liquid volume of the adhesive material ranges from 0.05 milliliters to 0.3 milliliters; the surface area of the welding portion 2 ranges from 60 square millimeters to 96 square millimeters; the surface tension of the adhesive material ranges from 30 millinewtons per meter to 40 millinewtons per meter; and the adhesive liquid viscosity of the adhesive material ranges from 200 millipascal-seconds to 500 millipascal-seconds.

The adhesive liquid volume of the adhesive material may be, but is not limited to, 0.05, 0.13, 0.28, or 0.30.

The surface area of the welding portion 2 may be, but is not limited to, 60 square millimeters, 64 square millimeters, 80 square millimeters, or 96 square millimeters.

The surface tension of the adhesive material may be, but is not limited to, 30 millinewtons per meter, 33 millinewtons per meter, 36 millinewtons per meter, or 40 millinewtons per meter.

The adhesive liquid viscosity of the adhesive material may be, but is not limited to, 200 millipascal-seconds, 300 millipascal-seconds, 400 millipascal-seconds, or 500 millipascal-seconds.

The present disclosure provides three examples and one comparative example, as detailed in a table below.

**[Table 1_sm_0001]**

| Cell No. | Weld Mark Area (mm²) | Surface Tension (mN/m) | Adhesive Liquid Viscosity (mPa·s) | Adhesive Liquid Volume (mL) | Tearing Defect Rate (ppm) |
|---|---|---|---|---|---|
| 1 | 96 | 30 | 200 | 0.30 | 500 |
| 2 | 80 | 33 | 300 | 0.13 | 300 |
| 3 | 60 | 40 | 500 | 0.05 | 500 |
| 4 | 64 | 36 | 100 | 0.28 | 1000 |

Cell Nos. 1, 2, and 3 correspond to Examples 1, 2, 3, and 4 correspond to Examples 1, 2 and 3, and Comparative Example 4, respectively. Examples 1, 2, and 3 all satisfy the above-mentioned ranges of the adhesive liquid volume of the adhesive material, the surface area of the welding portion 2, the surface tension of the adhesive material, and the adhesive liquid viscosity of the adhesive material.

In some embodiments, the buffering member 3 has a tensile shear strength ranging from 10 megapascals to 30 megapascals.

In some embodiments, along a thickness direction of the tab 1, the buffering member 3 has a thickness ranging from 0.5 millimeters to 3.5 millimeters.

In some embodiments, a ratio between a contact area between the buffering member 3 and the welding portion 2 to the surface area of the welding portion 2 ranges from 0.8 to 1.5.

In some embodiments, the adhesive material is any one of an acrylic adhesive, a modified epoxy acrylate structural adhesive, a green and red acrylic AB adhesive, and an acrylate structural adhesive.

For Example 1, the adhesive liquid volume a of the adhesive material is 0.30 milliliters, the welding area b of the welding portion 2 is 96 square millimeters, the surface tension c of the adhesive material is 30 millinewtons per meter, and the adhesive liquid viscosity d of the adhesive material is 200 millipascals per second. In this case, a=(b×k)/(c×d) is satisfied. The tearing defect rate of the tab 1 using the adhesive material in Example 1 is 500 ppm.

For Example 2, the adhesive liquid volume a of the adhesive material is 0.13 milliliters, the welding area b of the welding portion 2 material is 80 square millimeters, the surface tension c of the adhesive material material is 33 millinewtons per meter, and the adhesive liquid viscosity d of the adhesive material material is 300 millipascals per second. In this case, a=(b×k)/(c×d) is satisfied. The tearing defect rate of the tab 1 using the adhesive material in Example 2 is 300 ppm.

It should be noted that when the viscosity is lower than 200 millipascal-seconds, the adhesive material is difficult to control in terms of flow and positioning. After coating, the adhesive material tends to flow and is thus difficult to remain at a desired bonding position, which readily results in non-uniform distribution of the adhesive material and adversely affects the bonding effect. In addition, it is unfavorable for precise control of the position of the adhesive material and increases operational difficulty. When the viscosity is higher than 500 millipascal-seconds, the excessively high viscosity makes it difficult to coat the adhesive material uniformly. Greater pressure and force are required to spread the adhesive material, which not only increased operational difficulty but may also lead to non-uniform coating thickness of the adhesive material, thereby adversely affecting the overall bonding effect.

When the viscosity is lower than 200 millipascal-seconds, it is impossible to form an adhesive layer with a sufficient thickness and strength on a surface of the tab. The adhesive material cannot sufficiently fill the pits on the surface of the tab. After curing, the effective contact area and intermolecular forces between the adhesive layer and the tab are relatively small, thereby leading to reduced bonding strength and a tendency for debonding.

When the viscosity is higher than 500 millipascal-seconds, poor wettability may also occur. The adhesive material is difficult to fully wet the surface of the tab and thus cannot adhere well to the surface of an object to be bonded, resulting in formation of voids or bubbles between the adhesive layer and the tab. These defects weaken the bonding force between the adhesive material and the tab, reducing bonding reliability.

When the viscosity is higher than 500 millipascal-seconds, the excessively high viscosity hinders the chemical reactions within the adhesive material, slowing down the curing process, thus prolonging the overall curing duration. For large-scale production, this reduces production efficiency.

When the viscosity is higher than 500 millipascal-seconds, the high-viscosity adhesive material may generate relatively large internal stress during the curing process. When the internal stress exceedes a certain limit, it may cause cracking of the adhesive layer itself or cause stress concentration at an interface between the tab and the adhesive layer, thereby reducing the bonding strength. In particular, for the bonding of the tab, such internal stress may even cause damage to the tab.

It should be noted that when the surface tension is higher than 40 millinewtons, problems such as poor wettability, residual bubbles, and edge shrinkage may occur, as detailed below.

Poor wettability: The adhesive material is difficult to spread on the surface of the tab and tends to form droplet-like shapes, such that the surface of the tab cannot be sufficiently covered and wetted. As a result, the contact area between the adhesive material and the tab is reduced, and the bonding effect deteriorates.

Residual bubbles: During coating of the adhesive material, due to the high surface tension, air bubbles are difficult to discharge and are likely to remain in the adhesive layer. These bubbles become weak points in the adhesive layer, reducing strength and compactness of the adhesive layer, thereby adversely affecting bonding performance of the adhesive material.

Edge shrinkage: During curing of the adhesive material, the relatively high surface tension causes the adhesive material to shrink towards its center, resulting in thinning of edges of the adhesive layer or even adhesive deficiency at edge portions, thereby adversely affecting the integrity and reliability of bonding.

It should be noted that when the surface tension is lower than 30 millinewtons, it is difficult to form a stable adhesive layer due to the excessively low surface tension. During curing, the adhesive material cannot effectively maintain its shape and position and is prone to deformation and displacement, making it difficult to form a uniform and stable adhesive layer. As a result, the bonding effect and performance of the adhesive layer are adversely affected. In addition, the adhesive material exhibits increased tendency to adsorb dust and impurities. Specifically, the adhesive material with low surface tension has relatively high surface energy and is more likely to adsorb dust, impurities, and the like from the surrounding environment. Such impurities mixed into the adhesive layer reduce the purity and performance of the adhesive material, thereby adversely affecting bonding strength and durability.

For Example 3, the adhesive liquid volume a of the adhesive material is 0.05 milliliters, the welding area b of the welding portion 2 is 60 square millimeters, the surface tension c of the adhesive material is 40 millinewtons per meter, and the adhesive liquid viscosity d of the adhesive material is 500 millipascals per second. In this case, a=(b×k)/(c×d) is satisfied. The tearing defect rate of the tab 1 using the adhesive material in Example 3 is 500 ppm.

For Comparative Example 4, the adhesive liquid volume a of the adhesive material is 0.28 milliliters, the welding area b of the welding portion 2 is 64 square millimeters, the surface tension c of the adhesive material is 36 millinewtons per meter, and the adhesive liquid viscosity d of the adhesive material is 100 millipascals per second. In this case, a=(b×k)/(c×d) is not satisfied. The tearing defect rate of the tab 1 using the adhesive material in Comparative Example 4 is 1,000 ppm.

It can be understood that the Cell Nos. 1, 2, and 3 correspond to three examples, and Cell No. 4 corresponds to a comparative example. In Examples 1, 2, and 3, the above formula a=(b×k)/(c×d) is satisfied, such that the tearing defect rate of the tab 1 can be reduced to 500 ppm. In contrast, Comparative Example 4 does not satisfy the formula a=(b×k)/(c×d). Compared with Examples 1, 2, and 3, the tearing defect rate of the tab 1 in Comparative Example 4 is 1,000 ppm, which is significantly higher than the tearing defect rates of the tab 1 in Examples 1, 2, and 3 that satisfy the formula a=(b×k)/(c×d).

In the examples, the adhesive liquid volume of the adhesive material ranges from 0.05 milliliters to 0.3 milliliters, the surface area of the welding portion 2 ranges from 60 square millimeters to 96 square millimeters, the surface tension of the adhesive material ranges from 30 millinewtons per meter to 40 millinewtons per meter, and the adhesive liquid viscosity of the adhesive material ranges from 200 millipascal-seconds to 500 millipascal-seconds, and a=(b×k)/(c×d) is satisfied, thereby reducing the tearing defect rate of the tab 1 to less than or equal to 500 ppm.

In one embodiment, the adhesive material is any one of acrylic adhesive, modified epoxy acrylate structural adhesive, green and red acrylic AB adhesive, or acrylate structural adhesive.

The adhesive material includes a monomer structure, a crosslinking agent, an initiator, a plasticizer, and a solvent.

The monomer structure includes at least one of an acrylate monomer, methyl acrylate, ethyl acrylate, or butyl acrylate. The monomer structure is a main component of the adhesive material, accounting for 60% to 80% of a total mass of the adhesive material.

The crosslinking agent includes divinylbenzene or trimethylolpropane triacrylate. The crosslinking agent is configured to form a three-dimensional network structure and enhance cohesion and stability of the adhesive material. The crosslinking agent accounts for 3% to 10% of a total mass of the adhesive material.

The initiator includes at least one of benzoyl peroxide or azobisisobutyronitrile. The initiator is configured to initiate a polymerization reaction of the monomer structure. The initiator accounts for 0.5% to 2% of a total mass of the adhesive material.

The plasticizer includes at least one of dibutyl phthalate or triphenyl phosphate. The plasticizer is configured to increase flexibility of the adhesive material and improve handling performance of the adhesive material. The plasticizer accounts for 5% to 15% of a total mass of the adhesive material.

The solvent includes at least one of ethyl acetate, toluene, or acetone. The solvent is configured to adjust viscosity of the adhesive material. The solvent accounts for 10% to 30% of a total mass of the adhesive material.

It can be understood that selecting the above adhesive material from any one of the acrylic adhesive, the modified epoxy acrylate structural adhesive, the green and red acrylic AB adhesive, or the acrylate structural adhesive enables good adhesion and polymerization properties.

The present disclosure also provides a method for preparing an adhesive material. An acrylic adhesive is taken as an example of the adhesive material for description. When the adhesive material has another adhesive structure, the preparation steps are the same. The specific steps are as follows.

### Step 1: Preparation of a Reaction Vessel

Specifically, a three-necked flask equipped with a stirrer, a thermometer, and a reflux condenser is selected as the reaction vessel. It should be noted that the reaction vessel should be cleaned and dried before use to ensure cleanliness and dryness of the vessel, so as to avoid impurities affecting the reaction.

### Step 2: Polymerization Reaction

First, premixing is performed. Specifically, acrylate monomers, a crosslinking agent, a plasticizer, and an initiator that are accurately weighed are added into the three-necked flask. The stirrer is turned on, and the mixture is stirred at a speed of 200 r/min to 300 r/min for 15 minutes to 30 minutes to ensure that the raw materials are fully mixed.

Next, heating and polymerization are carried out. Specifically, the three-necked flask is placed in a constant-temperature water bath or oil bath and slowly heated to 70°C to 90°C. During heating, the initiator decomposes to generate free radicals, thereby initiating a polymerization reaction of the acrylate monomers. The temperature and the stirring speed are maintained constant, and the reaction is carried out for 3 hours to 6 hours while observing changes in viscosity of the reaction system.

Finally, viscosity is adjusted. Specifically, after the reaction is completed, an appropriate amount of a solvent is added to adjust the viscosity according to an actual viscosity of the adhesive material. If the viscosity is relatively high, the solvent is slowly added dropwise under continuous stirring until the viscosity reaches 200 millipascal-seconds to 500 millipascal-seconds. It should be noted that during addition of the solvent, uniformly stirring is performed to avoid excessive local viscosity differences.

### Step 3: Post-Treatment

First, degassing is performed. Since bubbles may be generated during the reaction, which affects quality and performance of the adhesive material, a degassing treatment is necessary. Specifically, the reacted adhesive material is placed in a vacuum environment for a period of time, for example, at a vacuum degree of 0.08 megapascals to 0.1 megapascals for 30 minutes to 60 minutes, to allow the bubbles to escape.

Next, filtration is performed. Specifically, the adhesive material is filtered using a filter screen or filter cloth to remove any unreacted solid particles or impurities that may be present in the adhesive material, and thus to obtain a purified adhesive material.

Finally, packaging and storage are carried out. Specifically, the prepared adhesive material is transferred into a well-sealed container, and the container is labeled with information such as the name, components, preparation date, and shelf life of the adhesive material. It should be noted that during storage, the container containing the adhesive material needs to be placed in a cool, dry, and well-ventilated place, avoiding direct sunlight and a high-temperature environment so as to prevent failure of the adhesive material.

In a second aspect, with reference to FIG. 1 to FIG. 3, an embodiment of the present disclosure provides an electrode assembly. The electrode assembly includes an electrode plate 4 and a tab 1. The tab 1 may be integrally formed by extending from the electrode plate 4, or may be provided independently of the electrode plate 4 and then connected to the electrode plate 4 by, for example, welding. A welding portion 2 is formed on the tab 1, and the tab 1 is provided with a buffering member 3 at least partially covering the welding portion 2.

The welding portion 2 of the tab 1 is configured to be welded to a connection sheet, and two ends of the connection sheet are respectively connected to a cell pack and a top cover assembly, to form a current loop.

The connection sheet and the welding portion of the tab 1 are first welded together by weld marks. During transportation of the tab 1 and the connection sheet, the tab 1 has a defect of being prone to tearing at the weld mark positions due to high stress. Therefore, in the present disclosure, after the tab 1 is welded to the connection sheet, the buffering member 3 is formed on the welding portion 2. The buffering member 3 exerts a stress-buffering effect at the weld mark positions, to prevent tearing of the welding portion of the tab.

The electrode plate 4 may be a positive electrode plate or a negative electrode plate.

The cell pack includes a plurality of electrode assemblies, and more specifically, includes a positive electrode plate, a negative electrode plate, and a separator disposed between the positive electrode plate and the negative electrode plate.

The positive electrode plate and the negative electrode plate are arranged at periodic intervals.

The top cover assembly is configured to cooperate with a housing to enclose the cell pack. The housing covers side surfaces and a bottom surface of the cell pack, and the top cover assembly covers a top surface of the cell pack. The top cover assembly is connected to the connection sheet and is configured to electrically connect a current of the cell pack to an external circuit via the top cover assembly.

It can be understood that the welding portion 2 is a position where the tab 1 is in contact with an ultrasonic welding horn. Since the welding portion 2 tends to tear, the buffering member 3 is provided at a surface of the welding portion 2 such that the buffering member 3 at least partially covers the welding portion 2, thereby preventing tearing of the tab 1 and reducing a defect rate associated with tab tearing.

In one embodiment, the buffering member 3 has a tensile shear strength ranging from 10 megapascals to 30 megapascals.

The tensile shear strength of the buffering member 3 may be any one of 10 megapascals, 15 megapascals, 20 megapascals, 25 megapascals, or 30 megapascals.

It can be understood that when the tensile shear strength of the buffering member 3 ranges from 10 megapascals to 30 megapascals, the buffering member 3 can better reduce the tearing defect rate of the tab 1.

In one embodiment, along a thickness direction of the electrode plate 4, i.e., along a thickness direction of the tab 1, the buffering member 3 has a thickness ranging from 0.5 millimeters to 3.5 millimeters.

The thickness of the buffering member 3 may be any of 0.5 millimeters, 1 millimeter, 1.5 millimeters, 2 millimeters, 2.5 millimeters, 3 millimeters, or 3.5 millimeters.

It can be understood that when the thickness of the buffering member 3 is less than 0.5 millimeters, the buffering member 3 exerts a relatively poor anti-tear effect on the tab 1 of the electrode plate 4; and when the thickness of the buffering member 3 is greater than 3.5 millimeters, in a subsequent process of applying an insulating adhesive to the tab 1, the thickness of the buffering member 3 affects the bonding effect of the insulating adhesive at the buffering member 3, and additionally increases a risk of a short circuit between a positive electrode plate and a negative electrode plate of a battery.

In one embodiment, a ratio between a contact area of the buffering member 3 and the welding portion 2 to the surface area of the welding portion 2 ranges from 0.8 to 1.5.

The ratio between the contact area of the buffering member 3 and the welding portion 2 to the surface area of the welding portion 2 may be any one of 0.8, 1, 1.2, 1.3, or 1.5.

It can be understood that when the ratio of the contact area between the buffering member 3 and the welding portion 2 to the surface area of the welding portion 2 is less than 0.8, the buffering member 3 exerts a relatively poor anti-tear effect on the tab 1 of the electrode plate 4; and when the ratio of the contact area between the buffering member 3 and the welding portion 2 to the surface area of the welding portion 2 is greater than 1.5, in a subsequent process of applying an insulating adhesive to the tab 1, the bonding effect of the insulating adhesive at the buffering member 3 is adversely affected, and additionally, a risk of a short circuit between a positive electrode plate and a negative electrode plate of a battery is increased.

In one embodiment, the welding portion 2 has a surface area ranging from 30 square millimeters to 100 square millimeters.

The surface area of the welding portion 2 refers to a surface area of the tab 1 within the dashed box in FIG. 3.

The surface area of the welding portion 2 may be any one of 30 square millimeters, 50 square millimeters, 70 square millimeters, 90 square millimeters, or 100 square millimeters.

It can be understood that when the surface area of the welding portion 2 is less than 30 square millimeters, the excessively small surface area of the welding portion 2 can affect conduction of a current inside the battery, leading to battery overheating; and when the surface area of the welding portion 2 is greater than 100 square millimeters, in a subsequent process of applying an insulating adhesive to the tab 1, the bonding effect of the insulating adhesive at the buffering member 3 is adversely affected, and additionally, a risk of a short circuit between a positive electrode plate and a negative electrode plate of a battery is increased.

In one embodiment, along the thickness direction of the tab 1, the buffering member 3 overlaps with the welding portion 2.

It can be understood that by overlapping the buffering member 3 with the welding portion 2, the welding portion 2 of the tab 1 can be better protected when the buffering member 3 is relatively small in size and volume. As a result, the welding portion 2 is less likely to be torn, thereby reducing the tearing defect rate of the tab 1.

In one embodiment, the buffering member 3 is an adhesive material. The adhesive material is any one of an acrylic adhesive, a modified epoxy acrylate structural adhesive, a green and red acrylic AB adhesive, and an acrylate structural adhesive.

The adhesive material includes a monomer structure, a crosslinking agent, an initiator, a plasticizer, and a solvent.

The monomer structure includes at least one of an acrylate monomer, methyl acrylate, ethyl acrylate, or butyl acrylate. The monomer structure is a main component of the adhesive material, accounting for 60% to 80% of a total mass of the adhesive material.

The crosslinking agent includes divinylbenzene or trimethylolpropane triacrylate. The crosslinking agent is configured to form a three-dimensional network structure and enhance cohesion and stability of the adhesive material. The crosslinking agent accounts for 3% to 10% of a total mass of the adhesive material.

The initiator includes at least one of benzoyl peroxide or azobisisobutyronitrile. The initiator is configured to initiate a polymerization reaction of the monomer structure. The initiator accounts for 0.5% to 2% of a total mass of the adhesive material.

The plasticizer includes at least one of dibutyl phthalate or triphenyl phosphate. The plasticizer is configured to increase flexibility of the adhesive material and improve handling performance of the adhesive material. The plasticizer accounts for 5% to 15% of a total mass of the adhesive material.

The solvent includes at least one of ethyl acetate, toluene, and acetone. The solvent is configured to adjust viscosity of the adhesive material. The solvent accounts for 10% to 30% of a total mass of the adhesive material.

It can be understood that selecting the above adhesive material from any one of the acrylic adhesive, the modified epoxy acrylate structural adhesive, the green and red acrylic AB adhesive, or the acrylate structural adhesive enables good adhesion and polymerization properties.

In a third aspect, an embodiment of the present disclosure provides an electrode assembly. The electrode assembly includes an electrode plate 4 according to any one of the above embodiments.

In a fourth aspect, an embodiment of the present disclosure provides a battery. The battery includes an electrode plate 4 according to any one of the above embodiments, or a tab 1, or the electrode assembly according to the above embodiments.

The present disclosure provides a method for preventing tearing of the tab 1. By providing the adhesive material at the welding portion 2 of the tab 1 to form the buffering member 3 that acts on the welding portion 2, the welding portion 2 is prevented from tearing, thereby reducing the tearing defect rate of the tab 1.

## Claims

1. A method for preventing tearing of a tab (1), the method comprising:
providing an adhesive material at a welding portion (2) of the tab (1) to form a buffering member (3) at least partially covering the welding portion (2).

2. The method for preventing tearing of the tab (1) according to claim 1, wherein a plurality of layers of tabs (1) are laminated and welded at the welding portion (2) to form a recessed structure.

3. The method for preventing tearing of the tab (1) according to claim 1, wherein:
an adhesive liquid volume of the adhesive material is **a** in the unit of milliliter;
a surface area of the welding portion (2) is **b** in the unit of square millimeter;
a surface tension of the adhesive material is **c** in the unit of millinewton per meter;
an adhesive liquid viscosity of the adhesive material is **d** in the unit of millipascal-second; and
**k** is a correlation coefficient ranging from 15 to 20, and $a = \left(b\times k\right) / \left(c\times d\right) .$

4. The method for preventing tearing of the tab (1) according to claim 3, wherein the adhesive liquid volume of the adhesive material ranges from 0.05 milliliters to 0.3 milliliters.

5. The method for preventing tearing of the tab (1) according to claim 3, wherein the surface area of the welding portion (2) ranges from 60 square millimeters to 96 square millimeters.

6. The method for preventing tearing of the tab (1) according to claim 3, wherein the surface tension of the adhesive material ranges from 30 millinewtons per meter to 40 millinewtons per meter.

7. The method for preventing tearing of the tab (1) according to claim 3, wherein the adhesive liquid viscosity of the adhesive material ranges from 200 millipascal-seconds to 500 millipascal-seconds.

8. The method for preventing tearing of the tab (1) according to claim 1, wherein the adhesive material is any one of an acrylic adhesive, a modified epoxy acrylate structural adhesive, a green and red acrylic AB adhesive, and an acrylate structural adhesive.

9. The method for preventing tearing of the tab (1) according to claim 8, wherein the adhesive material comprises a monomer structure, a crosslinking agent, an initiator, a plasticizer, and a solvent.

10. The method for preventing tearing of the tab (1) according to claim 9, wherein:
the monomer structure comprises at least one of an acrylate monomer, methyl acrylate, ethyl acrylate, or butyl acrylate; and
the monomer structure is a main component of the adhesive material, accounting for 60% to 80% of a total mass of the adhesive material.

11. The method for preventing tearing of the tab (1) according to claim 9, wherein:
the crosslinking agent comprises divinylbenzene or trimethylolpropane triacrylate;
the crosslinking agent is configured to form a three-dimensional network structure and enhance cohesion and stability of the adhesive material; and
the crosslinking agent accounts for 3% to 10% of a total mass of the adhesive material.

12. The method for preventing tearing of the tab (1) according to claim 9, wherein:
the initiator comprises at least one of benzoyl peroxide or azobisisobutyronitrile;
the initiator is configured to initiate a polymerization reaction of the monomer structure; and
the initiator accounts for 0.5% to 2% of a total mass of the adhesive material.

13. The method for preventing tearing of the tab (1) according to claim 9, wherein:
the plasticizer comprises at least one of dibutyl phthalate or triphenyl phosphate;
the plasticizer is configured to increase flexibility of the adhesive material and improve handling performance of the adhesive material; and
the plasticizer accounts for 5% to 15% of a total mass of the adhesive material.

14. The method for preventing tearing of the tab (1) according to claim 9, wherein:
the solvent comprises at least one of ethyl acetate, toluene, or acetone;
the solvent is configured to adjust a viscosity of the adhesive material; and
the solvent accounts for 10% to 30% of a total mass of the adhesive material.

15. A tab (1), having a welding portion (2) formed on the tab (1),
wherein the tab (1) is provided with a buffering member (3) at least partially covering the welding portion (2).

16. The tab (1) according to claim 5, wherein the buffering member (3) has a tensile shear strength ranging from 10 megapascals to 30 megapascals.

17. The tab (1) according to claim 5, wherein along a thickness direction of the tab (1), the buffering member (3) has a thickness ranging from 0.5 millimeters to 3.5 millimeters.

18. The tab (1) according to claim 5, wherein a ratio of a contact area between the buffering member (3) and the welding portion (2) to a surface area of the welding portion (2) ranges from 0.8 to 1.5.

19. An electrode assembly, comprising the tab (1) according to any one of claims 5 to 9.

20. A battery, comprising the tab (1) according to any one of claims 15 to 19 or the electrode assembly according to claim 19.
